# EUROPÄISCHE PATENTANMELDUNG

(11) **EP 4 477 346 A1**
(43) Veröffentlichungstag der Anmeldung: **18.12.2024**
(21) Anmeldenummer: 23179197.1
(22) Anmeldetag: 14.06.2023
(51) Int. Cl.: B23K 26/06, B23K 26/082, B23K 26/21, B23K 26/38

(54) **LASERBEARBEITUNGSVORRICHTUNG ZUM BEARBEITEN EINES WERKSTÜCKS, VERWENDUNG DERSELBEN, VERFAHREN ZUM LASERBEARBEITEN EINES WERKSTÜCKS**

(71) Anmelder: Bystronic Laser AG, 3362 Niederönz (CH)
(72) Erfinder: SCHWIND, Tobias, 3360 Herzogenbuchsee (CH); SCHEIDIGER, Simon, 4900 Langenthal (CH)
(74) Vertreter: Patentanwälte Geyer, Fehners & Partner mbB

(57) **Zusammenfassung**

Es wird eine Laserbearbeitungsvorrichtung (100) zum Bearbeiten eines Werkstücks (12) angegeben, insbesondere zum Laserschneiden oder Laserschweissen. Die Vorrichtung (100) besitzt eine Schnittstelle (14) zur Ankopplung einer Laserstrahlquelle für einen Bearbeitungslaserstrahl (15); eine Austrittsöffnung (11) für den Bearbeitungslaserstrahl (15); und ein optisches System (20) zwischen der Schnittstelle (14) und der Austrittsöffnung (11). Das optische System (20) weist mindestens eine Laserstrahlführungseinrichtung (25) zum Führen des Bearbeitungslaserstrahls (15) in einem Strahlengang zu der Austrittsöffnung (11) auf. Die Laserstrahlführungseinrichtung (25) beinhaltet wenigstens zwei in Fortpflanzungsrichtung z des Bearbeitungslaserstrahls (15) im Strahlengang seriell hintereinander geschaltete Hochfrequenz-Laserscannern (30). Die Hochfrequenz-Laserscanner (30) stellen jeweils einen maximalen Stellwinkel αₘₐₓ zur Auslenkung des Bearbeitungslaserstrahls in einer ersten Stellebene xz bereit. Durch die serielle Schaltung der Hochfrequenz-Laserscanner (30) wird ein maximaler summarischer Stellwinkel ∑αₘₐₓ in der ersten Stellebene xz erzielt.

## Beschreibung

Die Erfindung betrifft eine Laserbearbeitungsvorrichtung zum Bearbeiten eines Werkstücks, eine Verwendung derselben, ein Verfahren zum Laserbearbeiten eines Werkstücks und ein Computerprogrammprodukt.

Bei der Laserbearbeitung von Werkstücken, z.B. bei Verfahren zum thermischen Trennen von Werkstoffen mittels Laserstrahlung, auch Laserschneiden genannt, oder bei Verfahren zum Laserschweissen werden Laserbearbeitungsvorrichtungen eingesetzt. Eine derartige Laserbearbeitungsvorrichtung kann einen Laserbearbeitungskopf besitzen. Die Laserbearbeitungsvorrichtung bzw. der Laserbearbeitungskopf führt und formt das Laserstrahlwerkzeug, d.h. den Bearbeitungslaserstrahl, in möglichst optimaler Ausprägung auf das Werkstück.

Je nach Werkstücktyp, z.B. Dicke und Material eines Blechs, Bearbeitungsart, z.B. Laserschneiden oder Laserschweissen, und gewünschtem Bearbeitungsergebnis, z.B. Maximierung der Schneidgeschwindigkeit oder Vermeidung von Poren beim Schweissen, können für die Bearbeitung unterschiedliche Laserstrahlen optimal sein. Bekannte Laserbearbeitungsvorrichtungen stellen zumeist ein unveränderbares optisches Abbildungsverhältnis für den Bearbeitungslaserstrahl bereit. Diese Abbildung stellt aber in der Praxis einen Kompromiss dar: Eine nicht veränderbare Abbildung geht, insbesondere bei mittleren bis grossen Dicken eines Blechs, mit Einbussen beispielsweise in der Schnittqualität, namentlich Rauheit und Gratanhaftung, sowie mit geringeren Vorschubgeschwindigkeiten einher.

In den letzten Jahren haben verschiedene Hersteller von Laserbearbeitungsvorrichtungen Zoom-Optiken entwickelt, um die Spotgrösse des fokussierten Bearbeitungslaserstrahls an die jeweilige Anwendung, beim Laserschneiden beispielsweise an die Blechdicke und das Material, anzupassen.

Einen Schritt weiter in der Adaption des Laserstrahlwerkzeugs an den Bearbeitungsprozess gehen Ansätze, bei denen auch die Intensitätsverteilung und/oder die Strahlqualität, beispielsweise das Strahlparameterprodukt, an die Laseranwendung angepasst werden können. Verschiedene Lösungen in dieser Richtung sind aus dem Stand der Technik bekannt, siehe US 8781269 B2, US 9250390 B2, US 9346126 B2, EP 2730363 A1, EP2762263 A1, DE2821883 B1, DE102015116033 A1, EP2778746 B1, DE102015101263 A1, DE102008053397 B4.

Hochfrequentes Strahloszillieren gehört zu den Technologien der dynamischen Strahlformung (Dynamic Beam Shaping, DBS) und hat den Vorteil, dass nahezu beliebige Intensitätsverteilungen und Temperaturfelder in der Prozesszone erzeugt werden können und damit eine maximale Flexibilität bei der Anpassung an den Werkstücktyp, z.B. an die Blechdicke und/oder Blechqualität besteht. Auch bekannt ist, dass mit derart angepassten Bearbeitungslaserstrahlen signifikant bessere Bearbeitungsergebnisse erzielt werden können, siehe beispielsweise Goppold et al.: Chancen und Herausforderungen der dynamischen Strahlformung, Deutscher Schneidkongress, 2018; Goppold et al.: Dynamic Beam Shaping Improves Laser Cutting of Thick Steel Plates, Industrial Photonics, 2017; Goppold et al.: Laserschmelzschneiden mit dynamischer Strahlformung, Fraunhofer IWS Jahresbericht, 2015; Mahrle et al.: theoretical aspects of fibre laser cutting, Journal of Physics D Applied Physics, 2009.

Für eine laterale Auslenkung eines Bearbeitungslaserstrahls, auch Scannen des Laserstrahls genannt, werden verschiedene Technologien eingesetzt. Beispiele hierfür sind Galvo-Scanner, Piezo-Scanner, Voicecoil-Scanner oder MEMS-Scanner. Ziel dieser Technologien ist es, den Bearbeitungslaserstrahl möglichst schnell, z.B. hochfrequent, und lateral, z.B. in einer x/y-Ebene parallel zur Werkstückoberfläche, und möglichst weit, d.h. mit grossen Winkeln in einem grossen lateralen Scanbereich, auszulenken. Die Auslenkungs-Frequenzen werden auch Stellfrequenzen genannt und die Auslenkungs-Winkel werden auch Stellwinkel genannt. Jedoch können aus physikalisch-technischen Gründen mit bekannten Laserscannern, die zum Laserbearbeiten von Werkstücken eingesetzt werden, hohe Auslenkungs-Frequenzen, z.B. 10kHz, und grosse Auslenkungs-Winkel, z.B. > ±5mrad, des Bearbeitungslaserstrahls gleichzeitig nicht realisiert werden. Derartige physikalisch-technische Gründe sind beispielsweise Eigenfrequenzen und mechanische Stabilität von Komponenten der Bearbeitungsvorrichtung, auftretende Beschleunigungen bewegter Elemente und die erforderliche Kraft für die Bewegung.

Aufgabe der Erfindung ist es, eine Laserbearbeitungsvorrichtung und ein Verfahren zum Laserbearbeiten eines Werkstücks bereitzustellen, welche den Bearbeitungslaserstrahl auf einfache und optimale Weise bereitstellen.

Diese Aufgabe wird gelöst durch eine Laserbearbeitungsvorrichtung zum Bearbeiten eines Werkstücks nach Anspruch 1, eine Verwendung nach Anspruch 7, ein Verfahren zum Laserbearbeiten eines Werkstücks nach Anspruch 8 und ein Computerprogrammprodukt nach Anspruch 13.

Eine Ausführungsform betrifft eine Laserbearbeitungsvorrichtung zum Bearbeiten eines Werkstücks, insbesondere zum Laserschneiden oder Laserschweissen, insbesondere einen Laserbearbeitungskopf, mit
- einer Schnittstelle zur Ankopplung einer Laserstrahlquelle für einen Bearbeitungslaserstrahl;
- einer Austrittsöffnung für den Bearbeitungslaserstrahl; und
- einem optischen System zwischen der Schnittstelle und der Austrittsöffnung, das mindestens eine Laserstrahlführungseinrichtung zum Führen des Bearbeitungslaserstrahls in einem Strahlengang zu der Austrittsöffnung aufweist;

wobei die Laserstrahlführungseinrichtung wenigstens zwei in Fortpflanzungsrichtung des Bearbeitungslaserstrahls im Strahlengang seriell hintereinander geschaltete Hochfrequenz-Laserscanner beinhaltet, die jeweils zur Auslenkung des Bearbeitungslaserstrahls um mindestens einen Stellwinkel ausgebildet sind,
wobei jeder der Hochfrequenz-Laserscanner ausgebildet ist, einen maximalen Stellwinkel zur Auslenkung des Bearbeitungslaserstrahls in einer ersten Stellebene bereitzustellen, und wobei durch die serielle Schaltung der Hochfrequenz-Laserscanner ein maximaler summarischer Stellwinkel in der ersten Stellebene erzielt wird.

Die vorstehende Ausführungsform ermöglicht, den Stellwinkel jedes Hochfrequenz-Laserscanners, mit dem der Bearbeitungslaserstrahl der Laserbearbeitungsvorrichtung für die Bearbeitung des Werkstücks in der ersten Stellebene ausgelenkt werden kann, in einem Bereich bis zum maximalen Stellwinkel einzustellen. Die erste Stellebene kann insbesondere die Ebene sein, in der der betreffende Stellwinkel und die Fortpflanzungsrichtung des Bearbeitungslaserstrahls liegen. Durch die serielle Schaltung werden die Stellwinkel jedes Hochfrequenz-Laserscanners in der ersten Stellebene addiert und ein summarischer Stellwinkel wird erreicht. Auf diese Weise kann der Scanbereich, d.h. der Bereich, in dem der Bearbeitungslaserstrahl über dem Werkstück ausgelenkt werden kann, in einer ersten Richtung, die in der ersten Stellebene verläuft, vorteilhaft vergrössert werden und das bei gleichzeitig hoher Frequenz der Hochfrequenz-Laserscanner.

Die vorstehende Ausführungsform ermöglicht also trotz Nutzung von Hochfrequenz-Laserscannern, einen summarisch vergrösserten maximalen Stellwinkel zu erreichen. Dies wird ermöglicht anstatt einen einzelnen mehrachsigen Scanner auf die Stellfrequenz und die Auslenkung, d.h. den Stellwinkel, zu optimieren und so nur einen Kompromiss zwischen Stellfrequenz und Auslenkung zu erreichen, wobei die Frequenz dann bei grossem Stellwinkel keine Hochfrequenz sein kann. Die grosse Auslenkung, d.h. der grosse Scanbereich wird erreicht, indem mindestens zwei oder mehrere Hochfrequenz-Laserscanner (also mit Stellfrequenz von mind. 500 Hz) in Fortpflanzungsrichtung des Bearbeitungslaserstrahls hintereinander angeordnet werden, wodurch ein grösserer Scanbereich bei gleichzeitig hochfrequenter Stellfrequenz erzielt werden kann.

Ferner wird ermöglicht, dass der Stellwinkel, mit denen der Bearbeitungslaserstrahl bewegt wird, unabhängig von der Stellfrequenz optimiert werden kann. Zudem können höhere Stellfrequenzen bei grossem Scanbereich bereitgestellt werden, da mehrere Hochfrequenz-Laserscanner, also z.B. auch mehr als zwei Hochfrequenz-Laserscanner, seriell hintereinander geschaltet sind. Dadurch können die vorgenannten physikalisch-technischen Grenzen eines Hochfrequenz-Laserscanners erweitert werden. Zudem kann das bisher nicht lösbare Hardwareproblem der vorgenannten physikalisch-technischen Grenzen eines Hochfrequenz-Laserscanners durch optimiertes Betreiben mehrerer Hochfrequenz-Laserscanner, z.B. mittels einer Software, z.B. ein oder mehrere Programmmodule, gelöst werden. Auf diese Weise kann die Bearbeitung des Werkstücks und die Prozesseffizienz der Bearbeitung optimiert werden.

In einer Abwandlung kann wenigstens einer der Hochfrequenz-Laserscanner ausgebildet sein, einen weiteren maximalen Stellwinkel in einer zweiten Stellebene bereitzustellen. Auf diese Weise kann der Scanbereich nicht nur in einer ersten Richtung, sondern auch in einer zweiten Richtung, insbesondere einer Richtung senkrecht zur ersten Stellebene, vergrössert werden. Alternativ kann jeder der Hochfrequenz-Laserscanner ausgebildet sein, den weiteren maximalen Stellwinkel in der zweiten Stellebene bereitzustellen. Dadurch kann der Scanbereich zusätzlich maximiert werden. In anderen Abwandlungen kann wenigstens einer der Hochfrequenz-Laserscanner ausgebildet sein, in weiteren Stellebenen zusätzlich zur ersten und zweiten Stellebene maximale Stellwinkel bereitzustellen. Die zweite Stellebene kann insbesondere die Ebene sein, in der der betreffende Stellwinkel und die Fortpflanzungsrichtung des Bearbeitungslaserstrahls liegen.

Die erste Stellebene und die zweite Stellebene können in einem Winkel und/oder senkrecht zueinander angeordnet sein. Somit kann durch kombiniertes Auslenken des Bearbeitungslaserstrahls sowohl in der ersten als auch in der zweiten Stellebene ein umfangreicher Scanbereich flexibel erfasst werden. Durch die serielle Schaltung der Hochfrequenz-Laserscanner kann ein weiterer maximaler summarischer Stellwinkel in der zweiten Stellebene erzielt werden. Auf diese Weise kann durch Auslenken des Bearbeitungslaserstrahls sowohl in der ersten als auch in der zweiten Stellebene der Scanbereich wesentlich vergrössert werden.

Wenigstens zwei der Hochfrequenz-Laserscanner können ausgebildet sein, den Bearbeitungslaserstrahl um Stellwinkel auszulenken, die gleich oder unterschiedlich sind. Ferner können wenigstens zwei der Hochfrequenz-Laserscanner ausgebildet sein, den maximalen Stellwinkel und den weiteren maximalen Stellwinkel derart bereitzustellen, dass sie gleich oder unterschiedlich sind. Dadurch kann ein Scanbereich flexibel eingestellt werden.

In weiteren Abwandlungen kann mindestens einer oder jeder der Hochfrequenz-Laserscanner dazu ausgebildet sein, den Bearbeitungslaserstrahl in mindestens einer der Stellebenen mit einer Stellfrequenz in einem Bereich grösser oder gleich 0,5 kHz, bevorzugt zwischen 1 kHz und 10 kHz, auszulenken. Ferner kann der maximale Stellwinkel kleiner oder gleich 50 mrad, bevorzugt 1 bis 30 mrad, mehr bevorzugt 2 bis 20 mrad, sein. Der weitere maximale Stellwinkel kann kleiner oder gleich 50 mrad, bevorzugt 1 bis 30 mrad, mehr bevorzugt 2 bis 20 mrad, sein.

Mindestens einer oder jeder der Hochfrequenz-Laserscanner kann mindestens eine den Bearbeitungslaserstrahl zumindest teilweise reflektierende bewegliche Oberfläche und mindestens einen ansteuerbaren Aktuator zum Bewegen der Oberfläche aufweisen. Die mindestens eine reflektierende bewegliche Oberfläche kann ausgewählt sein aus einem dynamisch orientierbaren Spiegel, einem dynamisch verkippbaren Spiegel, einem Segmentspiegel mit mehreren dynamisch orientierbaren Spiegelsegmenten, einem dynamisch verformbaren Spiegel, einem dynamisch verformbaren Spiegel mit variablem Krümmungsradius (VRM), einem dynamisch bimorph deformierbaren Spiegel, einem dynamisch auf MEMS- oder MOEMS-Basis deformierbaren Spiegel und einem dynamisch auf Schwingspulen-Basis deformierbaren Spiegel. Der mindestens eine ansteuerbare Aktuator kann ausgewählt sein aus einem Piezo-Aktuator, einem Elektromotor, einem pneumatischen Motor, einem Exzenter, einer Vorrichtung zur Erzeugung eines oszillierenden elektromagnetischen Felds, einem MEMS-Oszillator, einer Schwingspule, einem elektrostatisch bewegbaren Aktuator, einem Galvanometerantrieb, einer Mehrzahl davon und/oder einer Kombination davon. Bevorzugt handelt es sich bei den Hochfrequenz-Laserscannern um Piezo-Hochfrequenz-Laserscanner.

Mindestens einer oder jeder der Hochfrequenz-Laserscanner kann mindestens eine den Bearbeitungslaserstrahl zumindest teilweise reflektierende bewegliche Oberfläche und mindestens einen ansteuerbaren Aktuator zum Bewegen der Oberfläche aufweisen, wobei die reflektierenden beweglichen Oberflächen jeweils um mindestens eine, in einer Ebene der jeweiligen Oberfläche liegende Achse, auch Kipp-Achse genannt, mit dem Aktuator verkippbar ausgebildet sind. Eine Oberfläche mit einer Kipp-Achse wird einachsige Oberfläche bezeichnet. Eine Oberfläche mit zwei Kipp-Achsen wird als zweiachsige Oberfläche bezeichnet. Eine Oberfläche mit mehreren Kipp-Achsen wird als mehrachsige Oberfläche bezeichnet.

Es können in einer Ausgestaltung der Kombination der Hochfrequenz-Laserscanner insgesamt zwei reflektierende verkippbare, in Fortpflanzungsrichtung des Bearbeitungslaserstrahls seriell hintereinander geschaltete Oberflächen vorgesehen sein, die jeweils eine Achse besitzen, und die in mindestens einem Parameter ausgewählt aus der Stellfrequenz, mit der sie verkippbar sind, und dem Stellwinkel, um den sie verkippbar sind, unterschiedlich sind. In dieser Ausgestaltung sind zwei einachsige Oberflächen seriell kombiniert. In einer alternativen Ausgestaltung der Kombination der Hochfrequenz-Laserscanner können mindestens zwei reflektierende verkippbare, in Fortpflanzungsrichtung des Bearbeitungslaserstrahls seriell hintereinander geschaltete Oberflächen vorgesehen sein, wobei eine oder mehrere einachsige Oberflächen und eine oder mehrere mehrachsige Oberflächen seriell kombiniert sind, mehr als zwei einachsige Oberflächen seriell kombiniert sind oder mindestens zwei mehrachsige Oberflächen seriell kombiniert sind. Mindestens zwei der Oberflächen der alternativen Ausgestaltung können in mindestens einem Parameter ausgewählt aus der Anzahl der Achsen pro Oberfläche, der Stellfrequenz, mit der die Oberflächen dynamisch verkippbar sind, und den Stellwinkeln, um die die Oberflächen dynamisch verkippbar sind, gleich oder unterschiedlich sein.

In der Abwandlung der Vorrichtung mit verkippbaren Oberflächen der Hochfrequenz-Laserscanner können folgende Ausgestaltungen realisiert sein: Die Achsen jeweils einer Oberfläche können in einem Winkel, z.B. in einem 90° Winkel oder in einem Winkel kleiner als 90°, zueinander angeordnet sein. Zumindest ein Teil der Achsen der seriell hintereinander geschalteten Oberflächen können parallel oder in einem Winkel zueinander angeordnet sein. Sind insgesamt zwei reflektierende verkippbare, in Fortpflanzungsrichtung des Bearbeitungslaserstrahls seriell hintereinander geschaltete Oberflächen der Hochfrequenz-Laserscanner vorgesehen, kann die eine der zwei Oberflächen auf eine grössere Stellfrequenz als die andere der zwei Oberflächen einstellbar sein. Ferner kann die andere der zwei Oberflächen auf einen grösseren Stellwinkel, als die eine der zwei Oberflächen einstellbar sein.

In einer Kombination der Hochfrequenz-Laserscanner, in der insgesamt mindestens zwei reflektierende verkippbare, in Fortpflanzungsrichtung des Bearbeitungslaserstrahls seriell hintereinander geschaltete Oberflächen vorgesehen sind, wobei eine oder mehrere einachsige Oberflächen und eine oder mehrere mehrachsige Oberflächen seriell kombiniert sind, mehr als zwei einachsige Oberflächen seriell kombiniert sind oder mindestens zwei mehrachsige Oberflächen seriell kombiniert sind, können folgende Ausgestaltungen realisiert sein: Mindestens einer der Hochfrequenz-Laserscanner kann auf eine grössere Stellfrequenz als mindestens ein anderer der Hochfrequenz-Laserscanner einstellbar oder eingestellt sein. Ferner kann mindestens einer der Hochfrequenz-Laserscanner auf einen grösseren Stellwinkel als mindestens ein anderer der Hochfrequenz-Laserscanner einstellbar oder eingestellt sein. Mindestens zwei der Hochfrequenz-Laserscanner können auf eine gleiche Stellfrequenz einstellbar oder eingestellt sein. Die Anzahl der Oberflächen kann mindestens drei betragen und die Anzahl der Achsen pro Oberfläche kann eins betragen. Eine der Oberflächen kann eine Anzahl der Achsen pro Oberfläche von mindestens zwei besitzen und eine andere der Oberflächen kann eine Anzahl der Achsen pro Oberfläche von eins besitzen.

In der Laserstrahlführungseinrichtung können folgende Kombinationen der Hochfrequenz-Laserscanner realisiert sein: Es können zwei gleich schnelle mehrachsige Scanner kombiniert sein, wobei möglichst hohe Frequenzen erreicht werden. Es können zwei gleich schnelle mehrachsige Scanner in Serie geschaltet sein, wobei ein möglichst grosser Scanbereich erreicht wird. Es können ein mehrachsiger Scanner mit möglichst hoher Frequenz und ein mehrachsiger Scanner mit möglichst grosser Auslenkung seriell angeordnet sein. Es können ferner ein mehrachsiger Scanner kombiniert mit einem einachsigem Scanner seriell hintereinander geschaltet sein. Es können zwei einachsige Scanner seriell kombiniert sein, wobei einer optimiert ist auf die Stellfrequenz und einer optimiert ist auf einen grossen Stellwinkel.

In der Laserbearbeitungsvorrichtung kann eine Steuerungseinheit zum Steuern der Hochfrequenz-Laserscanner und/oder der Laserbearbeitungsvorrichtung vorgesehen sein. Die Steuerungseinheit kann ein oder mehrere Programmmodule zum Optimieren und/oder Maximieren der Stellfrequenz und/oder des Stellwinkels aufweisen. Die Laserbearbeitungsvorrichtung und/oder die Steuerungseinheit kann eine Speichereinrichtung aufweisen. Ein oder mehrere der Komponenten der Laserbearbeitungsvorrichtung können ansteuerbar ausgebildet sein und mit der Steuerungseinheit datenleitend, drahtgebunden oder nicht drahtgebunden, verbunden sein. Ein oder mehrere, insbesondere jeder, der Hochfrequenz-Laserscanner können ansteuerbar, insbesondere individuell ansteuerbar, ausgebildet sein.

Die Laserbearbeitungsvorrichtung kann als ein Bearbeitungskopf ausgebildet sein und eine Einrichtung zum Bewegen des Bearbeitungskopfes kann vorgesehen sein. An der Schnittstelle kann eine Laserstrahlquelle für den Bearbeitungslaserstrahl angekoppelt sein, insbesondere eine Laserstrahlquelle mit einer Laserleistung grösser oder gleich 1 kW, bevorzugt zwischen 1 kW und 100 kW.

Eine weitere Ausführungsform betrifft eine Verwendung einer Laserbearbeitungsvorrichtung nach der vorstehenden Ausführungsform und Abwandlungen davon, zum Ausführen mindestens einer Prozedur ausgewählt aus
- Bearbeiten eines Werkstücks mit mindestens einer Stellfrequenz in einem Bereich grösser oder gleich 0,5 kHz, bevorzugt zwischen 1 kHz und 10 kHz, und/oder mit mindestens einem der summarischen Stellwinkel (Σα_{;} Σβ), insbesondere mit mindestens einem der maximalen summarischen Stellwinkel (Σα_{max;;} Σβₘₐₓ), und/oder mit einer Laserleistung grösser oder gleich 1 kW, bevorzugt zwischen 1 kW und 100 kW, der Laserstrahlquelle;
- Bearbeiten eines Werkstücks mit der als Bearbeitungskopf ausgebildeten Laserbearbeitungsvorrichtung, mit Optimieren einer Bewegungstrajektorie des Bearbeitungslaserstrahls in mindestens einer Werkstückebene, insbesondere gemäss mindestens einer vorbestimmten Kontur von zu schneidenden Werkstückteilen oder Schweissnähten, durch eine redundante Aufteilung der Bewegungstrajektorie des Bearbeitungslaserstrahls zwischen der Einrichtung zum Bewegen des Bearbeitungskopfes und den Hochfrequenz-Laserscannern;
- Zentrieren des Bearbeitungslaserstrahls in der Austrittsöffnung;
- Laserschneiden mit in Bezug zum Bearbeitungslaserstrahl dezentriertem Schneidgasstrahl, insbesondere Laserschneiden zum Erzeugen von Schrägkanten (Bevelcut) oder Laserschneiden von Rohren;
- Laserreinigen;
- Laserhärten;
- Entfernen von Füllmaterial von CFK-Werkstoffen mittels dem Bearbeitungslaserstrahl, insbesondere von Glasfasern; und
- Laserschweissen.

Eine andere Ausführungsform betrifft ein Verfahren zum Laserbearbeiten eines Werkstücks, insbesondere zum Laserschneiden oder Laserschweissen, mit einer Laserbearbeitungsvorrichtung nach der vorstehenden Ausführungsform und Abwandlungen davon; mit den Schritten
Erzeugen eines Bearbeitungslaserstrahls mittels der Laserstrahlquelle;
Führen des Bearbeitungslaserstrahls in dem Strahlengang zu der Austrittsöffnung mittels der mindestens einen Laserstrahlführungseinrichtung; und
Auslenken des Bearbeitungslaserstrahls mittels der wenigstens zwei in der Fortpflanzungsrichtung des Bearbeitungslaserstrahls im Strahlengang seriell hintereinander geschalteten Hochfrequenz-Laserscanner um jeweils mindestens einen Stellwinkel, wobei jeder der Hochfrequenz-Laserscanner einen maximalen Stellwinkel zur Auslenkung des Bearbeitungslaserstrahls in einer ersten Stellebene bereitstellt, und wobei durch die serielle Schaltung der Hochfrequenz-Laserscanner ein maximaler summarischer Stellwinkel in der ersten Stellebene erzielt wird.

In dem Verfahren kann wenigstens einer oder jeder der Hochfrequenz-Laserscanner einen weiteren maximalen Stellwinkel in einer zweiten Stellebene bereitstellen. Durch die serielle Schaltung der Hochfrequenz-Laserscanner kann ein weiterer maximaler summarischer Stellwinkel in der zweiten Stellebene erzielt werden. Die erste Stellebene und die zweite Stellebene können derart angeordnet werden, dass sie in einem Winkel und/oder senkrecht zueinander sind. Wenigstens zwei der Hochfrequenz-Laserscanner können den Bearbeitungslaserstrahl um Stellwinkel auslenken, die gleich oder unterschiedlich sind. Wenigstens zwei der Hochfrequenz-Laserscanner können den maximalen Stellwinkel und/oder den weiteren maximalen Stellwinkel derart bereitstellen, dass sie gleich oder unterschiedlich sind. Mindestens einer oder jeder der Hochfrequenz-Laserscanner kann in mindestens einer der Stellebenen den Bearbeitungslaserstrahl mit einer Stellfrequenz in einem Bereich grösser oder gleich 0,5 kHz, bevorzugt zwischen 1 kHz und 10 kHz, auslenken. Der maximale Stellwinkel kann in einem Bereich kleiner oder gleich 50 mrad, bevorzugt 1 bis 30 mrad, mehr bevorzugt 2 bis 20 mrad, bereitgestellt werden. Ferner kann der weitere maximale Stellwinkel in einem Bereich kleiner oder gleich 50 mrad, bevorzugt 1 bis 30 mrad, mehr bevorzugt 2 bis 20 mrad, bereitgestellt werden.

In dem Verfahren kann das Werkstück bearbeitet werden mit mindestens einem Parameter ausgewählt aus
- mindestens einer Stellfrequenz in einem Bereich grösser oder gleich 0,5 kHz, bevorzugt zwischen 1 kHz und 10 kHz;
- mindestens einem der Stellwinkel in den jeweiligen Stellebenen, insbesondere mit mindestens einem der maximalen summarischen Stellwinkel; und
- einer Laserleistung grösser oder gleich 1 kW, bevorzugt zwischen 1 kW und 100 kW, der Laserstrahlquelle.

Eine andere Ausführungsform betrifft ein Computerprogrammprodukt, beinhaltend ein oder mehrere Programmmodule, die bewirken, dass die Vorrichtung nach der vorstehenden Ausführungsform und Abwandlungen davon Schritte des Verfahrens nach der vorstehenden Ausführungsform und Abwandlungen und/oder mindestens eine der Prozeduren der Verwendung nach der vorstehenden Ausführungsform ausführt, insbesondere wenn die Programmmodule in eine Speichereinrichtung der Vorrichtung geladen werden.

Die Ausführungsformen und Abwandlungen der Laserbearbeitungsvorrichtung können in den Ausführungsformen und Abwandlungen des Verfahrens zum Laserbearbeiten eines Werkstücks genutzt werden. Das Werkstück kann mindestens ein Metall enthalten, also metallisch sein, und/oder die Form eines Bleches besitzen. Mit den vorstehenden Ausführungsformen des Verfahrens zum Laserbearbeiten eines Werkstücks können die gleichen Vorteile und Funktionen realisiert werden, wie mit den Ausführungsformen der Laserbearbeitungsvorrichtung, insbesondere mit gleichlautenden und/oder analogen Merkmalen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch ein Beispiel einer Laserbearbeitungsvorrichtung;
- Fig. 2a: schematisch ein Beispiel einer Laserstrahlführungseinrichtung;
- Fig. 2b: schematisch eine Abwandlung des Beispiels der Laserstrahlführungseinrichtung der Fig. 2a;
- Fig. 3a: schematisch ein Beispiel einer Laserstrahlführungseinrichtung;
- Fig. 3b: schematisch eine Abwandlung des Beispiels der Laserstrahlführungseinrichtung der Fig. 3a;
- Fig. 4: schematisch eine Abwandlung des Beispiels der Laserbearbeitungsvorrichtung.

Die Begriffe "Hochfrequenz", "hochfrequent" oder "dynamisch" können vorliegend eine Frequenz grösser oder gleich 0,5 kHz bezeichnen bzw. bedeuten. Gleiches gilt für grammatikalische Abwandlungen der Begriffe.

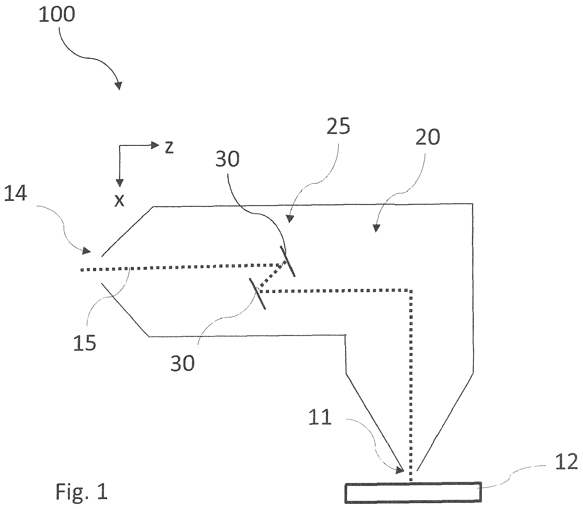

Fig. 1 zeigt schematisch als ein Beispiel eine Laserbearbeitungsvorrichtung 100, im Folgenden auch Vorrichtung 100 genannt, zum Bearbeiten eines Werkstücks 12, insbesondere zum Laserschneiden oder Laserschweissen. Im vorliegenden Beispiel ist die Laserbearbeitungsvorrichtung 100 als ein Laserbearbeitungskopf ausgebildet. Die Vorrichtung 100 besitzt eine Schnittstelle 14 zur Ankopplung einer Laserstrahlquelle für einen Bearbeitungslaserstrahl 15; eine Austrittsöffnung 11 für den Bearbeitungslaserstrahl; und ein optisches System 20 zwischen der Schnittstelle und der Austrittsöffnung. Das optische System 20 weist mindestens eine Laserstrahlführungseinrichtung 25 zum Führen des Bearbeitungslaserstrahls 15 in einem Strahlengang zu der Austrittsöffnung auf. Die Laserstrahlführungseinrichtung 25 besteht aus wenigstens zwei in Fortpflanzungsrichtung z des Bearbeitungslaserstrahls im Strahlengang seriell hintereinander geschaltete Hochfrequenz-Laserscannern 30. Wie in Fig. 1 dargestellt ist, kann der Bearbeitungslaserstrahl 15 nach dem Durchlaufen der Laserstrahlführungseinrichtung 25, d.h. hinter der Laserstrahlführungseinrichtung 25, durch das optische System 20 in Richtung der Austrittsöffnung 11 umgelenkt werden. Alternativ kann der Bearbeitungslaserstrahl 15 im optischen System 20 hinter der Laserstrahlführungseinrichtung 25 geradlinig zur Austrittsöffnung 11 geführt werden (nicht gezeigt).

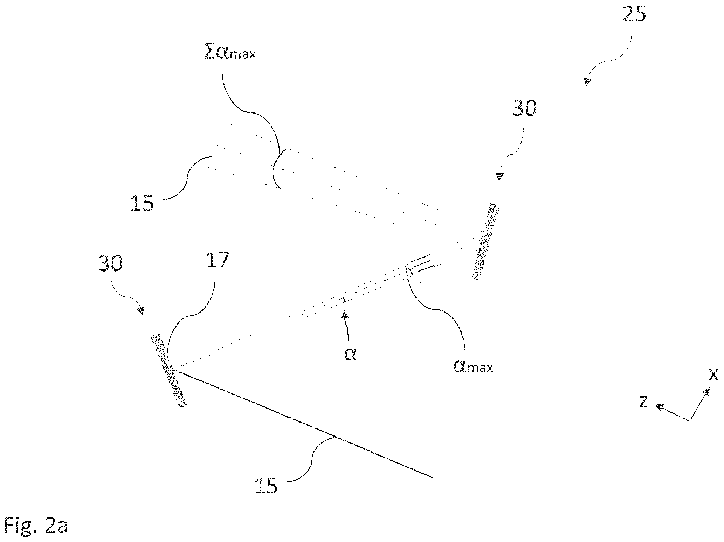

Fig. 2a zeigt schematisch die Laserstrahlführungseinrichtung 25. Die Hochfrequenz-Laserscanner 30 sind jeweils zur Auslenkung des Bearbeitungslaserstrahls 15 um mindestens einen Stellwinkel α, der in einer ersten Stellebene xz liegt, ausgebildet. Die erste Stellebene xz ist im vorliegenden Beispiel durch die Fortpflanzungsrichtung z und eine dazu orthogonale Richtung x aufgespannt. Jeder der Hochfrequenz-Laserscanner 30 ist ausgebildet, einen maximalen Stellwinkel αₘₐₓ zur Auslenkung des Bearbeitungslaserstrahls 15 in der ersten Stellebene xz bereitzustellen. Durch die serielle Schaltung der Hochfrequenz-Laserscanner 30 wird ein maximaler summarischer Stellwinkel Σαₘₐₓ in der ersten Stellebene xz bereitgestellt.

Im Betrieb der Laserbearbeitungsvorrichtung 100 wird ein Bearbeitungslaserstrahl 15 mittels einer an der Schnittstelle 14 angekoppelten Laserstrahlquelle (in Fig. 1 nicht gezeigt) erzeugt. Der Bearbeitungslaserstrahl 15 wird mittels dem optischen System 20 in dem Strahlengang zu der Austrittsöffnung 11 geführt. Der Bearbeitungslaserstrahl 15 wird durch die zwei in der Fortpflanzungsrichtung z des Bearbeitungslaserstrahls 15 im Strahlengang seriell hintereinander geschalteten Hochfrequenz-Laserscanner 30 der Laserstrahlführungseinrichtung 25 um jeweils den Stellwinkel α ausgelenkt. Dabei stellt jeder der Hochfrequenz-Laserscanner 30 den maximalen Stellwinkel αₘₐₓ zur Auslenkung des Bearbeitungslaserstrahls in der ersten Stellebene xz bereit. Durch die serielle Schaltung der Hochfrequenz-Laserscanner wird ein maximaler summarischer Stellwinkel Σαₘₐₓ in der ersten Stellebene xz erzielt.

Da die Hochfrequenz-Laserscanner 30 in Fortpflanzungsrichtung z des Bearbeitungslaserstrahls 15 seriell angeordnet sind, werden im Betrieb der Vorrichtung 100 die Stellwinkel α jedes Hochfrequenz-Laserscanners 30 in der ersten Stellebene xz addiert. Damit wird der Scanbereich auf einfache Weise vergrössert. Werden beide Hochfrequenz-Laserscanner 30 auf den maximalen Stellwinkel αₘₐₓ eingestellt, wird der maximale summarischer Stellwinkel Σαₘₐₓ erreicht und der Scanbereich maximiert. Ferner wird der summarische Stellwinkel, um den der Bearbeitungslaserstrahl 15 ausgelenkt wird, unabhängig von der Stellfrequenz der Hochfrequenz-Laserscanner 30 optimiert. Zudem können höhere Stellfrequenzen der Hochfrequenz-Laserscanner 30 bei einem grossem Scanbereich bereitgestellt werden.

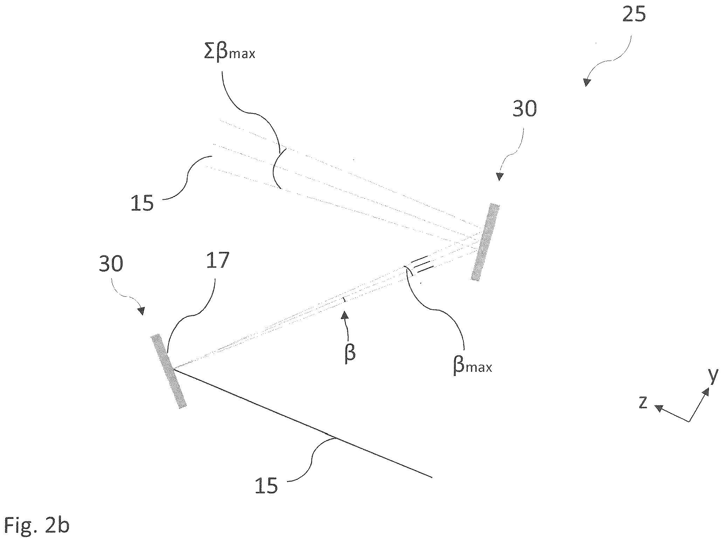

Fig. 2b stellt eine Abwandlung des in Fig. 2a gezeigten Beispiels dar. Die Hochfrequenz-Laserscanner 30 sind in dieser Abwandlung zusätzlich ausgebildet, den Bearbeitungslaserstrahl 15 um mindestens einen Stellwinkel β in einer zweiten Stellebene yz auszulenken. Die zweite Stellebene yz ist im vorliegenden Beispiel durch die Fortpflanzungsrichtung z und eine dazu orthogonale Richtung y aufgespannt. Ferner ist im vorliegenden Beispiel die zweite Stellebene yz orthogonal zu der ersten Stellebene xz. Jeder der Hochfrequenz-Laserscanner 30 ist ausgebildet, einen maximalen Stellwinkel βₘₐₓ zur Auslenkung des Bearbeitungslaserstrahls 15 in der zweiten Stellebene yz bereitzustellen.

Durch die serielle Schaltung der Hochfrequenz-Laserscanner 30 kann im Betrieb der Laserstrahlführungseinrichtung 25 der vorliegenden Abwandlung zusätzlich zum maximalen summarischen Stellwinkel Σαₘₐₓ in der ersten Stellebene xz ein maximaler summarischer Stellwinkel Σβₘₐₓ in der zweiten Stellebene yz erzielt werden. Die maximalen summarischen Stellwinkel Σαₘₐₓ und Σβₘₐₓ können mit den Hochfrequenz-Laserscannern 30 in den zwei Stellebenen xz und yz, d.h. in zwei orthogonalen Richtungen x und y senkrecht zur Fortpflanzungsrichtung z des Bearbeitungslaserstrahls 15, eingestellt werden. Daher kann der Bearbeitungslaserstrahl 15 beim Scannen auf optimierten Bahnen in der von den Richtungen x und y aufgespannten xy-Ebene ausgelenkt werden.

In den vorliegenden Beispielen ist jeder der Hochfrequenz-Laserscanner 30 dazu ausgebildet, den Bearbeitungslaserstrahl 15 in mindestens einer der Stellebenen xz und yz mit einer Stellfrequenz von z. B. 2 kHz auszulenken, mit Stellwinkeln im Bereich bis zu den maximalen Stellwinkeln αₘₐₓ und/oder βₘₐₓ von 50 mrad, z.B. 10 mrad.

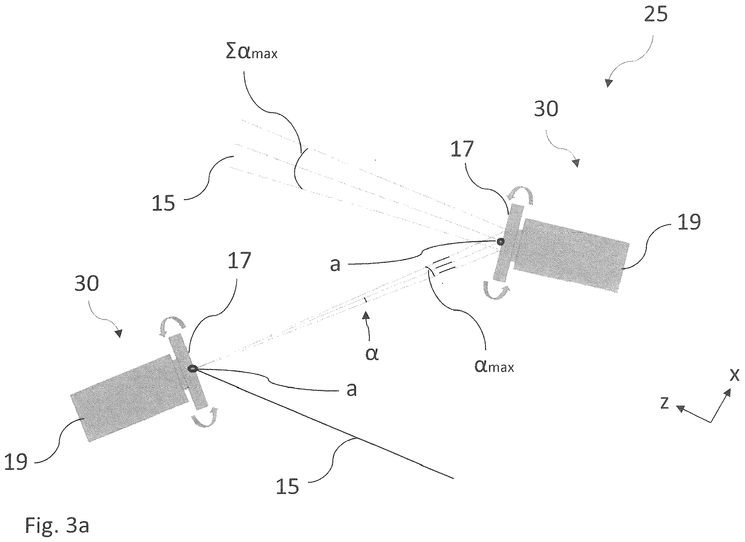

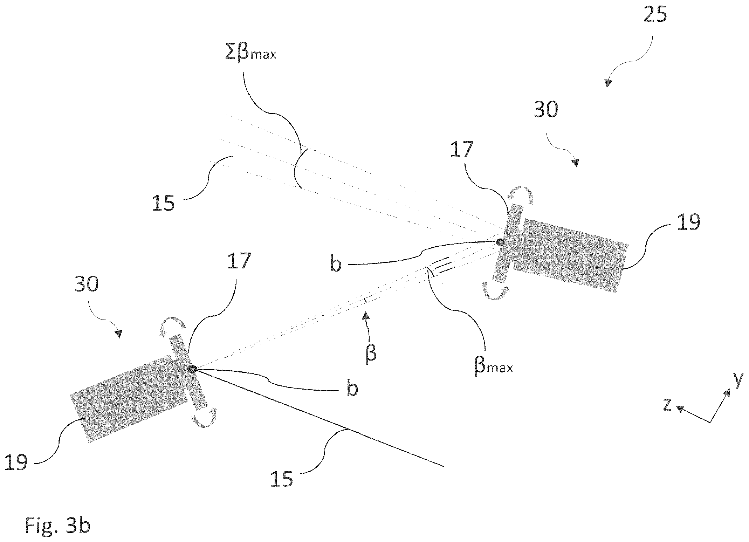

Fig. 3a zeigt ein weiteres Beispiel der in Fig. 2a dargestellten Laserstrahlführungseinrichtung 25. Fig. 3b veranschaulicht eine zur Fig. 2b analoge Abwandlung des Beispiels der Fig. 3a. Jeder der Hochfrequenz-Laserscanner 30 besitzt in diesem Beispiel eine den Bearbeitungslaserstrahl 15 reflektierende bewegliche Oberfläche 17 und mindestens einen ansteuerbaren Aktuator 19 zum Bewegen der Oberfläche 17. Die reflektierende bewegliche Oberfläche 17 ist als ein dynamisch, d.h. hochfrequent, verkippbarer Spiegel aus SiC (Siliziumcarbid) ausgebildet. Alternativ kann ein mit einer dielektrischen Schicht, Metallschicht (z.B. Kupfer) oder Metalloxidschicht versehenes Glassubstrat (z.B. fused silica) als Spiegel eingesetzt werden. Die Grösse der Oberfläche 17 ist jeweils derart gewählt, dass sie mit dem Durchmesser des Bearbeitungslaserstrahls 15 an der Position des jeweiligen Spiegels korrespondiert. Der Aktuator 19 ist ein Piezo-Aktuator.

In Abwandlungen dieses Beispiels kann als reflektierende bewegliche Oberfläche 17 ein Segmentspiegel mit mehreren dynamisch orientierbaren Spiegelsegmenten, ein dynamisch verformbarer Spiegel, ein dynamisch verformbarer Spiegel mit variablem Krümmungsradius (VRM), ein dynamisch bimorph deformierbarer Spiegel, ein dynamisch auf MEMS- oder MOEMS-Basis deformierbarer Spiegel oder ein dynamisch auf Schwingspulen-Basis deformierbaren Spiegel genutzt werden.

In dem Beispiel der Fig. 3a sind als die Hochfrequenz-Laserscanner 30 zwei reflektierende, verkippbare, in Fortpflanzungsrichtung z des Bearbeitungslaserstrahls 15 seriell hintereinander geschaltete Oberflächen 17 vorgesehen, die jeweils eine erste Achse a besitzen, um die sie mittels der Aktuatoren 19 verkippbar sind. Die ersten Achsen a liegen jeweils in der Ebene der betreffenden Oberfläche 17, sind senkrecht zur Ebene xz und parallel zueinander angeordnet. Die Stellfrequenz, mit der die Oberflächen 17 der beiden Hochfrequenz-Laserscanner 30 jeweils um die erste Achse a verkippbar sind, und der Stellwinkel, um den sie jeweils um die erste Achse a verkippbar sind, sind als unterschiedlich vorgegeben. Dabei ist einer der Hochfrequenz-Laserscanner 30 auf eine hohe Frequenz und der andere Hochfrequenz-Laserscanner 30 auf eine grosse Auslenkung optimiert. In dieser Ausgestaltung der Hochfrequenz-Laserscanner 30 sind zwei einachsige Oberflächen 17 seriell kombiniert.

In der Abwandlung der Fig. 3b besitzen die zwei seriell hintereinander geschalteten Oberflächen 17 jeweils eine zweite Achse b, die senkrecht zur ersten Achse a angeordnet ist und um die sie verkippbar sind. Die zweiten Achsen b liegen jeweils in der Ebene der betreffenden Oberfläche 17, sind senkrecht zur Ebene yz und parallel zueinander angeordnet. Die Stellfrequenz, mit der die Oberflächen 17 um die beiden Achsen a und b verkippbar sind, und der Stellwinkel, um den sie um die beiden Achsen a und b verkippbar sind, können gleich oder unterschiedlich sein. In dieser Ausgestaltung der Hochfrequenz-Laserscanner 30 sind zwei mehrachsige Oberflächen 17 seriell kombiniert.

Bei einer anderen Abwandlung dieses Beispiels sind ein Hochfrequenz-Laserscanner 30, dessen Oberfläche 17 die erste Achse a besitzt, und ein anderer Hochfrequenz-Laserscanner 30, dessen Oberfläche 17 die erste Achse a und die zweite Achse b besitzt, kombiniert. Die Stellfrequenz, mit die Oberflächen 17 um die jeweiligen Achsen a und b verkippbar sind, und der Stellwinkel, um den sie um die jeweiligen Achsen a und b verkippbar sind, können gleich oder unterschiedlich sein. In dieser Ausgestaltung der Hochfrequenz-Laserscanner 30 sind eine einachsige Oberfläche 17 und eine mehrachsige Oberfläche 17 seriell kombiniert.

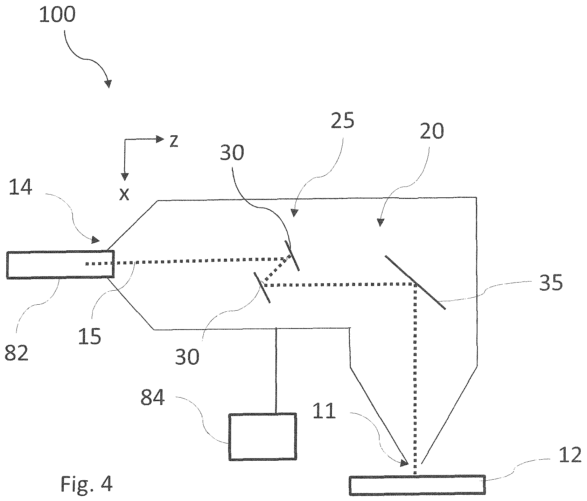

Fig. 4 stellt eine Abwandlung der Laserbearbeitungsvorrichtung 100 dar. In Fig. 4 ist die Laserbearbeitungsvorrichtung 100 an der Schnittstelle 14 mit einer Laserquelle 82 versehen. Alternativ kann die Laserstrahlquelle 82 über eine Transportfaser mit der Schnittstelle 14 verbunden sein (nicht gezeigt). Eine Steuerungseinheit 84 ist mit den ansteuerbaren Komponenten der Vorrichtung 100 drahtgebunden oder drahtlos datenleitend verbunden, insbesondere mit den Hochfrequenz-Laserscannern 30 der Laserstrahlführungseinrichtung 25. Das optische System 20 kann weitere optische Elemente, z.B. Linsen (nicht gezeigt), beinhalten. Wie in Fig. 4 dargestellt, kann das optische System 20 einen Umlenkspiegel 35 beinhalten, der den von den Hochfrequenz-Laserscannern 30 ausgelenkten Bearbeitungslaserstrahl 15 zur Austrittsöffnung 11 umlenkt.

### Bezugszeichenliste

- 11: Austrittsöffnung
- 12: Werkstück
- 14: Schnittstelle
- 15: Bearbeitungslaserstrahl
- 17: Oberfläche
- 19: Aktuator
- 20: optisches System
- 25: Laserstrahlführungseinrichtung
- 30: Hochfrequenz-Laserscanner
- 35: Umlenkspiegel
- 82: Laserstrahlquelle
- 84: Steuerungseinrichtung
- 100: Laserbearbeitungsvorrichtung
- xz: Stellebene
- yz: Stellebene

## Patentansprüche

1. Laserbearbeitungsvorrichtung (100) zum Bearbeiten eines Werkstücks (12), insbesondere zum Laserschneiden oder Laserschweissen, insbesondere Laserbearbeitungskopf, mit
- einer Schnittstelle (14) zur Ankopplung einer Laserstrahlquelle für einen Bearbeitungslaserstrahl (15);
- einer Austrittsöffnung (11) für den Bearbeitungslaserstrahl; und
- einem optischen System (20) zwischen der Schnittstelle und der Austrittsöffnung, das mindestens eine Laserstrahlführungseinrichtung (25) zum Führen des Bearbeitungslaserstrahls in einem Strahlengang zu der Austrittsöffnung aufweist; wobei die Laserstrahlführungseinrichtung wenigstens zwei in Fortpflanzungsrichtung (z) des Bearbeitungslaserstrahls im Strahlengang seriell hintereinander geschaltete Hochfrequenz-Laserscanner (30) beinhaltet, die jeweils zur Auslenkung des Bearbeitungslaserstrahls um mindestens einen Stellwinkel (α, β) ausgebildet sind, wobei jeder der Hochfrequenz-Laserscanner(30) ausgebildet ist, einen maximalen Stellwinkel (αₘₐₓ) zur Auslenkung des Bearbeitungslaserstrahls in einer ersten Stellebene (xz) bereitzustellen, und wobei durch die serielle Schaltung der Hochfrequenz-Laserscanner(30) ein maximaler summarischer Stellwinkel (Σαₘₐₓ) in der ersten Stellebene (xz) erzielt wird.

2. Vorrichtung nach Anspruch 1,
wobei wenigstens einer der Hochfrequenz-Laserscanner(30) ausgebildet ist, einen weiteren maximalen Stellwinkel (βₘₐₓ) in einer zweiten Stellebene (yz) bereitzustellen.

3. Vorrichtung nach Anspruch 2,
wobei die erste Stellebene (xz) und die zweite Stellebene (yz) senkrecht zueinander angeordnet sind; und/oder
wobei jeder der Hochfrequenz-Laserscanner(30) ausgebildet ist, den weiteren maximalen Stellwinkel (βₘₐₓ) in der zweiten Stellebene (yz) bereitzustellen; und/oder wobei durch die serielle Schaltung der Hochfrequenz-Laserscanner ein weiterer maximaler summarischer Stellwinkel (Σβₘₐₓ) in der zweiten Stellebene (yz) erzielt wird.

4. Vorrichtung nach einem der vorhergehenden Ansprüche,
wobei jeder der Hochfrequenz-Laserscanner(30) dazu ausgebildet ist, den Bearbeitungslaserstrahl in mindestens einer der Stellebenen (xz; yz) mit einer Stellfrequenz in einem Bereich grösser oder gleich 0.5 kHz, bevorzugt zwischen 1 kHz und 10 kHz, auszulenken; und/oder
wobei der maximale Stellwinkel (αₘₐₓ) kleiner oder gleich 50 mrad, bevorzugt 1 bis 30 mrad, mehr bevorzugt 2 bis 20 mrad, ist; und/oder
wobei der weitere maximale Stellwinkel (βₘₐₓ) kleiner oder gleich 50 mrad, bevorzugt 1 bis 30 mrad, mehr bevorzugt 2 bis 20 mrad, ist.

5. Vorrichtung nach einem der vorhergehenden Ansprüche,
wobei mindestens einer oder jeder der Hochfrequenz-Laserscanner(30) mindestens eine den Bearbeitungslaserstrahl reflektierende bewegliche Oberfläche (17) und mindestens einen ansteuerbaren Aktuator (19) zum Bewegen der Oberfläche aufweist, und/oder
wobei die mindestens eine reflektierende bewegliche Oberfläche (17) ausgewählt ist aus einem dynamisch orientierbaren Spiegel, einem dynamisch verkippbaren Spiegel, einem Segmentspiegel mit mehreren dynamisch orientierbaren Spiegelsegmenten, einem dynamisch verformbaren Spiegel, einem dynamisch verformbaren Spiegel mit variablem Krümmungsradius (VRM), einem dynamisch bimorph deformierbaren Spiegel, einem dynamisch auf MEMS- oder MOEMS-Basis deformierbaren Spiegel und einem dynamisch auf Schwingspulen-Basis deformierbaren Spiegel, und/oder
wobei der mindestens eine ansteuerbare Aktuator (19) ausgewählt ist aus einem Piezo-Aktuator, einem Elektromotor, einem pneumatischen Motor, einem Exzenter, einer Vorrichtung zur Erzeugung eines oszillierenden elektromagnetischen Felds, einem MEMS-Oszillator, einer Schwingspule, einem elektrostatisch bewegbaren Aktuator, einem Galvanometerantrieb, einer Mehrzahl davon und/oder einer Kombination davon.

6. Vorrichtung nach einem der vorhergehenden Ansprüche,
wobei eine Steuerungseinheit (84) zum Steuern der Hochfrequenz-Laserscanner(30) und/oder der Laserbearbeitungsvorrichtung (100) vorgesehen ist, die ein oder mehrere Programmmodule zum Optimieren und/oder Maximieren der Stellfrequenz und/oder des Stellwinkels aufweist; und/oder
wobei die Laserbearbeitungsvorrichtung (100) als ein Bearbeitungskopf ausgebildet ist und eine Einrichtung zum Bewegen des Bearbeitungskopfes vorgesehen ist; und/oder wobei an der Schnittstelle eine Laserstrahlquelle (82) für den Bearbeitungslaserstrahl angekoppelt ist, insbesondere eine Laserstrahlquelle mit einer Laserleistung grösser oder gleich 1 kW, bevorzugt zwischen 1 kW und 100 kW.

7. Verwendung einer Laserbearbeitungsvorrichtung (100) nach einem der vorhergehenden Ansprüche, zum Ausführen mindestens einer Prozedur ausgewählt aus
- Bearbeiten eines Werkstücks (12) mit mindestens einer Stellfrequenz in einem Bereich grösser oder gleich 0,5 kHz, bevorzugt zwischen 1 kHz und 10 kHz, und/oder mit mindestens einem der summarischen Stellwinkel (Σα_{;} Σβ), insbesondere mit mindestens einem der maximalen summarischen Stellwinkel (Σα_{max;;} Σβₘₐₓ), und/oder mit einer Laserleistung grösser oder gleich 1 kW, bevorzugt zwischen 1 kW und 100 kW, der Laserstrahlquelle;
- Bearbeiten eines Werkstücks (12) mit der als Bearbeitungskopf ausgebildeten Laserbearbeitungsvorrichtung (100), mit Optimieren einer Bewegungstrajektorie des Bearbeitungslaserstrahls (15) in mindestens einer Werkstückebene, insbesondere gemäss mindestens einer vorbestimmten Kontur von zu schneidenden Werkstückteilen oder Schweissnähten, durch eine redundante Aufteilung der Bewegungstrajektorie des Bearbeitungslaserstrahls zwischen der Einrichtung zum Bewegen des Bearbeitungskopfes und den Hochfrequenz-Laserscannern (30);
- Zentrieren des Bearbeitungslaserstrahls (15) in der Austrittsöffnung (11);
- Laserschneiden mit in Bezug zum Bearbeitungslaserstrahl dezentriertem Schneidgasstrahl, insbesondere Laserschneiden zum Erzeugen von Schrägkanten (Bevelcut) oder Laserschneiden von Rohren;
- Laserreinigen;
- Laserhärten;
- Entfernen von Füllmaterial von CFK-Werkstoffen mittels dem Bearbeitungslaserstrahl, insbesondere von Glasfasern; und
- Laserschweissen.

8. Verfahren zum Laserbearbeiten eines Werkstücks (12), insbesondere zum Laserschneiden oder Laserschweissen, mit einer Laserbearbeitungsvorrichtung (100) nach einem der Ansprüche 1 bis 6; mit
Erzeugen eines Bearbeitungslaserstrahls (15) mittels der Laserstrahlquelle (82); Führen des Bearbeitungslaserstrahls in dem Strahlengang zu der Austrittsöffnung (11) mittels der mindestens einen Laserstrahlführungseinrichtung (25); und Auslenken des Bearbeitungslaserstrahls (15) mittels der wenigstens zwei in der Fortpflanzungsrichtung (z) des Bearbeitungslaserstrahls im Strahlengang seriell hintereinander geschalteten Hochfrequenz-Laserscanner (30) um jeweils mindestens einen Stellwinkel (α, β),
wobei jeder der Hochfrequenz-Laserscanner(30) einen maximalen Stellwinkel (αₘₐₓ) zur Auslenkung des Bearbeitungslaserstrahls in einer ersten Stellebene (xz) bereitstellt, und wobei durch die serielle Schaltung der Hochfrequenz-Laserscanner(30) ein maximaler summarischer Stellwinkel (Σαₘₐₓ) in der ersten Stellebene (xz) erzielt wird.

9. Verfahren nach Anspruch 8,
wobei wenigstens einer oder jeder der Hochfrequenz-Laserscanner(30) einen weiteren maximalen Stellwinkel (βₘₐₓ) in einer zweiten Stellebene (yz) bereitstellt.

10. Verfahren nach Anspruch 9,
wobei durch die serielle Schaltung der Hochfrequenz-Laserscanner(30) ein weiterer maximaler summarischer Stellwinkel (Σβₘₐₓ) in der zweiten Stellebene (yz) erzielt wird; und/oder
wobei die erste Stellebene (xz) und die zweite Stellebene (yz) derart angeordnet werden, dass sie senkrecht zueinander sind.

11. Verfahren nach einem der Ansprüche 8 bis 10, wobei jeder der Hochfrequenz-Laserscanner(30) in mindestens einer der Stellebenen (xz; yz) den Bearbeitungslaserstrahl (15) mit einer Stellfrequenz in einem Bereich grösser oder gleich 0,5 kHz, bevorzugt zwischen 1 kHz und 10 kHz, auslenkt; und/oder wobei der maximale Stellwinkel (αₘₐₓ) in einem Bereich kleiner oder gleich 50 mrad, bevorzugt 1 bis 30 mrad, mehr bevorzugt 2 bis 20 mrad, bereitgestellt wird; und/oder wobei der weitere maximale Stellwinkel (βₘₐₓ) in einem Bereich kleiner oder gleich 50 mrad, bevorzugt 1 bis 30 mrad, mehr bevorzugt 2 bis 20 mrad, bereitgestellt wird.

12. Verfahren nach einem der Ansprüche 8 bis 11,
wobei das Werkstück (12) bearbeitet wird mit mindestens einem Parameter ausgewählt aus
- mindestens einer Stellfrequenz in einem Bereich grösser oder gleich 0,5 kHz, bevorzugt zwischen 1 kHz und 10 kHz;
- mindestens einem der Stellwinkel (α_{;} β) in den jeweiligen Stellebenen (xz; yz), insbesondere mit mindestens einem der maximalen summarischen Stellwinkel (Σα_{max;;} Σβₘₐₓ); und
- einer Laserleistung grösser oder gleich 1 kW, bevorzugt zwischen 1 kW und 100 kW, der Laserstrahlquelle.

13. Computerprogrammprodukt, beinhaltend ein oder mehrere Programmmodule, die bewirken, dass die Vorrichtung nach einem der Ansprüche 1 bis 6 Schritte des Verfahrens nach einem der Ansprüche 8 bis 12 und/oder mindestens eine der Prozeduren der Verwendung nach Anspruch 7 ausführt, insbesondere wenn die Programmmodule in eine Speichereinrichtung der Vorrichtung geladen werden.
